(19) Europäisches Patentamt
European Patent Office
Office européen des brevets

(11) **EP 4 765 303 A1**

(12) **EUROPEAN PATENT APPLICATION**
published in accordance with Art. 153(4) EPC

(43) Date of publication:
**24.06.2026 Bulletin 2026/26**

(21) Application number: **25848871.7**

(22) Date of filing: **29.07.2025**

(51) International Patent Classification (IPC):
$H01M\ 10/0587^{(2010.01)}$    $H01M\ 10/04^{(2006.01)}$
$H01M\ 4/587^{(2010.01)}$    $H01M\ 10/052^{(2010.01)}$
$H01M\ 50/446^{(2021.01)}$    $H01M\ 50/451^{(2021.01)}$
$H01M\ 4/02^{(2006.01)}$

(52) Cooperative Patent Classification (CPC):
H01M 4/02; H01M 4/587; H01M 10/04;
H01M 10/052; H01M 10/0587; H01M 50/446;
H01M 50/451

(86) International application number:
**PCT/KR2025/011208**

(87) International publication number:
**WO 2026/029522 (05.02.2026 Gazette 2026/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.08.2024 KR 20240102781**

(71) Applicant: **LG Energy Solution, Ltd.
Seoul 07335 (KR)**

(72) Inventors:
• **PARK, Ji Young
Daejeon 34122 (KR)**
• **LEE, Yun Ju
Daejeon 34122 (KR)**
• **HAN, Woo Ri
Daejeon 34122 (KR)**
• **SON, Soon Han
Daejeon 34122 (KR)**
• **KIM, Hong Jae
Daejeon 34122 (KR)**
• **LEE, Chang Woo
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CYLINDRICAL LITHIUM SECONDARY BATTERY**

(57) The present invention relates to a lithium secondary battery in which a value of X defined by Equation 1 described above is in a range of 7 m$^2$ to 16 m$^2$.

EP 4 765 303 A1

**(Cont. next page)**

FIG. 5

## EP 4 765 303 A1

**Description**

**TECHNICAL FIELD**

This application claims priority from Korean Patent Application No. 10-2024-0102781, filed on August 1, 2024, the disclosure of which is incorporated by reference herein.

The present invention relates to a cylindrical type lithium secondary battery, and more particularly, to a high-capacity cylindrical type lithium secondary battery with excellent thermal safety and economic efficiency.

**BACKGROUND ART**

Demand for lithium secondary batteries as an energy source has been significantly increased with technological advances in electric vehicles and portable electronic devices.

The lithium secondary battery may be classified into cylindrical type, prismatic type, and pouch type batteries depending on a shape of a battery case, wherein, after a jelly-roll-type electrode assembly, which is prepared by sequentially stacking sheet-shaped positive electrode, separator, and negative electrode and then winding it in one direction, is accommodated in a cylindrical battery can, the cylindrical type battery among them is formed in a sealed form by covering an upper portion of the battery can with a cap plate.

With respect to cylindrical type batteries, small-sized cylindrical type secondary batteries with a form factor of 1865 (cylindrical type secondary battery with a diameter of 18 mm × a height of 65 mm) or 2170 (cylindrical type secondary battery with a diameter of 21 mm × a height of 70 mm) were mainly used conventionally, but in recent years, as electric vehicles are required to have increased driving ranges and faster charging rates, development and use of a large-sized cylindrical type secondary battery represented by a larger form factor, for example, 4680 (cylindrical type secondary battery with a diameter of 46 mm × a height of 80 mm), are being considered.

However, resistance and heat generation were not major issues for the small-sized cylindrical type secondary batteries with a form factor of 18650 (cylindrical type secondary battery with a diameter of 18 mm × a height of 65 mm) or 21700 (cylindrical type secondary battery with a diameter of 21 mm × a height of 70 mm) which were mainly used in the past, but since the large-sized cylindrical type secondary batteries have a wide electrode due to high-capacity design and accordingly, have a large amount of an active material reacting with an electrolyte solution in the electrode, there is a problem in that an amount of heat generated is also increased.

Accordingly, with respect to natural graphite among artificial graphite and natural graphite which are generally used as a negative electrode active material, although the natural graphite is known to have advantages of excellent price competitiveness and high capacity due to a higher degree of crystallinity than other carbon-based active materials such as artificial graphite, it has been difficult to use the natural graphite at a high ratio in the large-sized cylindrical type secondary batteries due to possibility of ignition because a reaction area is increased due to a larger specific surface area than the artificial graphite.

Thus, for large-sized cylindrical type secondary batteries appropriately applicable to medium- and large-sized devices such as automobiles, there is a need to develop a technique that achieves low production cost, high capacity, and excellent safety.

**DISCLOSURE OF THE INVENTION**

**TECHNICAL PROBLEM**

An aspect of the present invention provides a cylindrical type secondary battery having a wide reaction area and excellent safety due to low possibility of ignition by controlling a reaction area of a negative electrode active material layer and a thickness ratio of a ceramic coating layer in a separator.

**TECHNICAL SOLUTION**

[1] The present invention provides a cylindrical type lithium secondary battery including an electrode assembly in which a positive electrode, a negative electrode, and a separator disposed between the positive electrode and the negative electrode are wound in one direction; and a battery can in which the electrode assembly and an electrolyte are accommodated, wherein the negative electrode includes a negative electrode active material layer formed on a negative electrode collector, the negative electrode active material layer includes natural graphite and artificial graphite as a negative electrode active material, the separator includes a substrate and a ceramic coating layer that is entirely coated on one surface or both surfaces of the separator substrate, and a value of $X$ defined by Equation 1 is in a range of 7 m$^2$ to 16 m$^2$.

[Equation 1]

$$X = \frac{AA \times LA \times (1 - P) \times \{(RA_{NG} \times BA_{NG}) + (RA_{AG} \times BA_{AG})\}}{ST_c/ST \times 100}$$

In Equation 1,

AA (unit: cm$^2$) is an area of the negative electrode active material layer, LA (unit: g/cm$^2$) is a loading amount of the negative electrode active material layer formed on the negative electrode collector, P (unitless) is porosity of the negative electrode active material layer, $RA_{NG}$ is a weight ratio of the natural graphite to a total weight of the natural graphite and the artificial graphite which are included in the negative electrode active material layer, $BA_{NG}$ (unit: m$^2$/g) is a Brunauer-Emmett-Teller (BET) specific surface area of the natural graphite, $RA_{AG}$ is a weight ratio of the artificial graphite to the total weight of the natural graphite and the artificial graphite which are included in the negative electrode active material layer, $BA_{AG}$ (unit: m$^2$/g) is a BET specific surface area of the artificial graphite, $ST_c$ (unit: $\mu$m) is a thickness of the ceramic coating layer in the separator, and ST (unit: $\mu$m) represents a thickness of the separator.

[2] The present invention provides the cylindrical type lithium secondary battery of [1] above, wherein the AA is in a range of 5500 cm$^2$ to 6000 cm$^2$.

[3] The present invention provides the cylindrical type lithium secondary battery of [1] or [2] above, wherein the $RA_{NG}$ is 0.5 or more.

[4] The present invention provides the cylindrical type lithium secondary battery of at least one of [1] to [3] above, wherein the $BA_{NG}$ is in a range of 1 m$^2$/g to 3 m$^2$/g.

[5] The present invention provides the cylindrical type lithium secondary battery of at least one of [1] to [4] above, wherein the $BA_{AG}$ is in a range of 0.5 m$^2$/g to 0.9 m$^2$/g.

[6] The present invention provides the cylindrical type lithium secondary battery of at least one of [1] to [5] above, wherein the negative electrode has a total reaction area of the artificial graphite and the natural graphite of the negative electrode active material layer of 200 m$^2$ or more.

[7] The present invention provides the cylindrical type lithium secondary battery of at least one of [1] to [6] above, wherein the LA is in a range of 0.025 g/cm$^2$ to 0.035 g/cm$^2$.

[8] The present invention provides the cylindrical type lithium secondary battery of at least one of [1] to [7] above, wherein the P is 0.35 or less.

[9] The present invention provides the cylindrical type lithium secondary battery of at least one of [1] to [8] above, wherein the ST is in a range of 12 $\mu$m to 15 $\mu$m.

[10] The present invention provides the cylindrical type lithium secondary battery of at least one of [1] to [9] above, wherein the $ST_c$ is 5 $\mu$m or less.

[11] The present invention provides the cylindrical type lithium secondary battery of at least one of [1] to [10] above, wherein the $ST_c$/ST is in a range of 0.05 to 0.3.

[12] The present invention provides the cylindrical type lithium secondary battery of at least one of [1] to [11] above, wherein a ratio (R/H) of a diameter (R) of the lithium secondary battery to a height (H) of the lithium secondary battery is 0.4 or more.

[14] The present invention provides a battery pack including the cylindrical type lithium secondary battery of at least one of [1] to [13] above.

## ADVANTAGEOUS EFFECTS

Since a cylindrical type lithium secondary battery according to the present invention controls a ratio of a ceramic coating layer in a separator, porosity of a negative electrode active material layer, a product of ratios of artificial graphite and natural graphite, a product of specific surface areas of the artificial graphite and the natural graphite, a loading amount of a negative electrode, and a negative electrode area to satisfy a specific relationship by adjusting a thickness of the ceramic coating layer of the separator, capacity and output characteristics of the lithium secondary battery may be improved by improving thermal safety of the negative electrode and thermal/mechanical properties of the separator.

## BRIEF DESCRIPTION OF THE DRAWINGS

FIG. 1 is a view illustrating a stacked state before winding of an electrode assembly according to the present invention.

FIG. 2 is a cross-sectional view illustrating a structure of an electrode of an electrode assembly according to an embodiment of the present invention.

FIG. 3 is a view for explaining a structure of an electrode assembly according to an embodiment of the present invention.

FIG. 4 is a cross-sectional view illustrating a structure of a lithium secondary battery according to an embodiment of the present invention.

FIG. 5 is a cross-sectional view illustrating a structure of a lithium secondary battery according to another embodiment of the present invention.

FIG. 6 is a view for explaining a battery pack according to the present invention.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular embodiments only and is not intended to be limiting of the invention. The terms of a singular form may include plural forms unless referred to the contrary.

In this specification, it will be further understood that the terms "include," "comprise," or "have" specify the presence of stated features, numbers, steps, elements, or combinations thereof, but do not preclude the presence or addition of one or more other features, numbers, steps, elements, or combinations thereof. In addition, in this specification, when a part such as a layer, film, region, or plate is formed on another part, the direction in which it is formed is not limited to the upper direction, and includes being formed in the side or lower direction.

The terms 'upper surface' and 'lower surface' in this specification are used as relative concepts in order to easily explain the technical idea of the invention. Therefore, the terms 'upper surface' and 'lower surface' do not refer to a specific direction, position, or component, and are interchangeable with each other. For example, the 'upper surface' may be interpreted as the 'lower surface', and the 'lower surface' may be interpreted as the 'upper surface'. Therefore, the 'upper surface' may be expressed as 'first' and the 'lower surface' may be expressed as 'second', or the 'lower surface' may be expressed as 'first' and the 'upper surface' may be expressed as 'second'. However, within one embodiment, the terms 'upper surface' and 'lower surface' are not used interchangeably.

Hereinafter, the present invention will be described in more detail.

A large-sized cylindrical type lithium secondary battery, such as a 4680 cylindrical type battery, has excellent energy density, but since total heat generation increases, it is important to improve thermal safety. According to the present invention, even if the total heat generation in the battery increases because a high proportion of natural graphite is included in a negative electrode active material layer of the large-sized cylindrical type lithium secondary battery, the thermal safety may be improved by controlling a ratio of a ceramic coating layer of a separator.

Accordingly, the present invention provides an optimal numerical range of the ratio of the ceramic coating layer in the separator with respect to a ratio of natural graphite to artificial graphite in a negative electrode active material, and it was confirmed that a lithium secondary battery satisfying this range has excellent thermal safety. Particularly, the present invention confirms that, although the total heat generation increases in the large-sized battery due to a large amount of active material reacting with an electrolyte solution in an electrode, the thermal safety may be compensated when coating the separator with ceramic at an appropriate numerical ratio, and the present invention is significant in that it provides a numerical range in which the thermal safety is improved without degradation of output characteristics.

Specifically, in a case in which the ceramic coating layer is excessively formed to improve thermal/mechanical properties of the separator, since a distance between a positive electrode and a negative electrode is increased, output characteristics of a cell may be degraded and occurrence of a side reaction due to an increase in moisture may be increased, and, in a case in which the ceramic coating layer is formed thinly, an effect of improving thermal safety may be insignificant, but both output characteristics and thermal safety of a cylindrical type lithium secondary battery according to the present invention may be improved.

Specifically, the lithium secondary battery of the present invention is a cylindrical type lithium secondary battery including an electrode assembly in which a positive electrode, a negative electrode, and a separator disposed between the positive electrode and the negative electrode are wound in one direction; and a battery can in which the electrode assembly and an electrolyte are accommodated.

Also, the negative electrode included in the lithium secondary battery of the present invention includes a negative electrode collector and a negative electrode active material layer formed on the negative electrode collector, and the negative electrode active material layer includes natural graphite and artificial graphite as a negative electrode active material.

Furthermore, the separator included in the lithium secondary battery of the present invention includes a substrate and a ceramic coating layer that is entirely coated on one surface or both surfaces of the separator substrate.

Specifically, according to the present invention, there is provided a cylindrical type lithium secondary battery in which a value of X defined by Equation 1 below is in a range of 7 $m^2$ to 16 $m^2$, specifically 7.1 $m^2$ to 16 $m^2$, 7.1 $m^2$ to 15.9 $m^2$, 7.2 $m^2$ to 16 $m^2$, or 7.2 $m^2$ to 15.9 $m^2$, more specifically 7.3 $m^2$ to 15.9 $m^2$, 7.3 $m^2$ to 15.8 $m^2$, or 7.3 $m^2$ to 15.7 $m^2$, still more specifically 7.4 $m^2$ to 15.6 $m^2$, 7.4 $m^2$ to 15.5 $m^2$, or 7.4 $m^2$ to 15.4 $m^2$, and most specifically 7.5 $m^2$ to 15.3 $m^2$. In a case in which the X value is less than 7 $m^2$, since a ratio of the ceramic coating layer in the separator is high in comparison to a reaction area of the negative electrode active material layer, the thermal/mechanical properties of the separator may be improved, but the distance between the positive electrode and the negative electrode may be increased to degrade the output characteristics of the cell, and in a case in which the X value is greater than 16 $m^2$, since the ratio of the ceramic coating layer in the separator is low in comparison to the reaction area of the negative electrode active material layer, possibility of battery ignition may increase. In a case in which the X value satisfies the above-described range, a cylindrical type secondary battery having improved thermal safety as well as excellent capacity and productivity may be provided.

[Equation 1]

$$X = \frac{AA \times LA \times (1-P) \times \{(RA_{NG} \times BA_{NG}) + (RA_{AG} \times BA_{AG})\}}{ST_C/ST \times 100}$$

In Equation 1, AA (unit: $cm^2$) means an "area of the negative electrode active material layer in the cylindrical type lithium secondary battery". The area of the negative electrode active material layer refers to an area of a horizontal surface on the negative electrode collector coated with the negative electrode active material, and may be measured by multiplying a length and a width of the negative electrode active material layer. The AA may be in a range of 5500 $cm^2$ to 6000 $cm^2$, specifically 5550 $cm^2$ to 6000 $cm^2$, 5500 $cm^2$ to 5950 $cm^2$ or 5550 $cm^2$ to 5950 $cm^2$, more specifically 5560 $cm^2$ to 5950 $cm^2$, 5570 $cm^2$ to 5950 $cm^2$ or 5580 $cm^2$ to 5900 $cm^2$, still more specifically 5600 $cm^2$ to 5900 $cm^2$, 5620 $cm^2$ to 5880 $cm^2$ or 5650 $cm^2$ to 5850 $cm^2$, and most specifically 5700 $cm^2$ to 5800 $cm^2$. In a case in which the AA satisfies the above-described range, the thermal safety may be further improved while energy density is high.

Also, in Equation 1, $RA_{NG}$ means a "weight ratio of natural graphite to a total weight of the natural graphite and artificial graphite which are included in the negative electrode active material layer". The $RA_{NG}$ may be 0.4 or more, specifically 0.41 or more, 0.42 or more or 0.43 or more, more specifically 0.44 or more, 0.45 or more or 0.46 or more, still more specifically 0.47 or more, 0.48 or more or 0.49 or more, and most specifically 0.5 or more. In a case in which the $RA_{NG}$ satisfies the above-described range, high-capacity characteristics may be achieved as a high proportion of the natural graphite with high lithium ion storage capacity is included, and productivity may be excellent.

Furthermore, in Equation 1, $BA_{NG}$ (unit: $m^2/g$) means a "Brunauer-Emmett-Teller (BET) specific surface area of the natural graphite included in the negative electrode active material layer". In the present invention, the BET specific surface area is measured by a BET method, wherein it refers to a specific surface area of measured particles themselves. The $BA_{NG}$ may be in a range of 1 $m^2/g$ to 3 $m^2/g$, specifically 1.2 $m^2/g$ to 3 $m^2/g$, 1.3 $m^2/g$ to 3 $m^2/g$, 1.2 $m^2/g$ to 2.9 $m^2/g$, 1.3 $m^2/g$ to 2.9 $m^2/g$, 1.4 $m^2/g$ to 2.9 $m^2/g$ or 1.3 $m^2/g$ to 2.8 $m^2/g$, more specifically 1.4 $m^2/g$ to 2.8 $m^2/g$, 1.4 $m^2/g$ to 2.7 $m^2/g$, 1.5 $m^2/g$ to 2.7 $m^2/g$ or 1.6 $m^2/g$ to 2.7 $m^2/g$, still more specifically 1.7 $m^2/g$ to 2.7 $m^2/g$, 1.8 $m^2/g$ to 2.7 $m^2/g$, 1.8 $m^2/g$ to 2.6 $m^2/g$, 1.8 $m^2/g$ to 2.5 $m^2/g$, 1.8 $m^2/g$ to 2.4 $m^2/g$, 1.8 $m^2/g$ to 2.3 $m^2/g$ or 1.9 $m^2/g$ to 2.2 $m^2/g$, and most specifically 2.1 $m^2/g$. In a case in which the specific surface area of the natural graphite satisfies the above-described range, high-temperature storage characteristics and high-temperature life characteristics may be further improved.

Also, in Equation 1, $RA_{AG}$ means a "weight ratio of artificial graphite to the total weight of the natural graphite and the artificial graphite which are included in the negative electrode active material layer". The $RA_{AG}$ may be 0.6 or less, specifically 0.59 or less, 0.58 or less or 0.57 or less, more specifically 0.56 or less or 0.55 or less, still more specifically 0.54 or less, 0.53 or less or 0.52 or less, and most specifically 0.5 or less. In a case in which the $RA_{AG}$ satisfies the above-described range, capacity characteristics may be further improved.

Furthermore, in Equation 1, $BA_{AG}$ (unit: $m^2/g$) means a "BET specific surface area of the artificial graphite included in the negative electrode active material layer". The $BA_{AG}$ may be in a range of 0.5 $m^2/g$ to 0.9 $m^2/g$, specifically 0.5 $m^2/g$ to 0.8 $m^2/g$, 0.6 $m^2/g$ to 0.9 $m^2/g$ or 0.6 $m^2/g$ to 0.8 $m^2/g$, and more specifically 0.7 $m^2/g$. In a case in which the specific surface area of the artificial graphite satisfies the above-described range, structural safety and output characteristics of the secondary battery may be further improved.

Also, the cylindrical type lithium secondary battery according to an embodiment of the present invention may have a "total reaction area of the artificial graphite and the natural graphite which are included in the negative electrode active material layer" of 200 $m^2$ or more, specifically 205 $m^2$ or more, 210 $m^2$ or more, or 215 $m^2$ or more, more specifically 218 $m^2$ or more, 221 $m^2$ or more, or 224 $m^2$ or more, still more specifically 225 $m^2$ or more, 226 $m^2$ or more, 227 $m^2$ or more,

or 228 m² or more, and most specifically 230 m² or more. In a case in which the total reaction area of the artificial graphite and the natural graphite satisfies the above-described range, capacity is excellent, and both productivity and thermal safety may be improved. In the present invention, the total reaction area of the artificial graphite and the natural graphite means a sum of reaction areas of each of the graphite negative electrode active materials which is calculated by the following equation, and means a value of $AA \times LA \times \{(BA_{AG} \times RA_{AG}) + (BA_{NG} \times RA_{NG})\}$ of a numerator in Equation 1.

The reaction area (m²) of each graphite negative electrode active material = the area (AA, unit: cm²) of the negative electrode active material layer × a loading amount (LA, unit: g/cm²) of the negative electrode active material layer × the weight ratio of each graphite to the total graphite weight included in the negative electrode active material layer × the BET specific surface area (m²/g) of each graphite included in the negative electrode active material layer

Also, in Equation 1, LA (unit: g/cm²) means a "loading amount of the negative electrode active material layer". In the present invention, the loading amount of the negative electrode active material layer means a mass (g) of the negative electrode active material layer included per 1 cm² of area, wherein it means a mass obtained by excluding a weight of the negative electrode collector from a weight of the negative electrode per unit area. The LA may be in a range of 0.025 g/cm² to 0.035 g/cm², specifically 0.026 g/cm² to 0.034 g/cm², more specifically 0.027 g/cm² to 0.033 g/cm² or 0.027 g/cm² to 0.032 g/cm², still more specifically 0.028 g/cm² to 0.031 g/cm², and most specifically 0.029 g/cm² to 0.030 g/cm². In a case in which the loading amount of the negative electrode active material layer satisfies the above-described range, the capacity characteristics and life characteristics may be improved.

Furthermore, in Equation 1, P (unitless) means "porosity of the negative electrode active material layer". In the present invention, the porosity of the negative electrode active material layer means a ratio of pores (empty space) in the negative electrode active material layer, and may have a value of 0 to less than 1. The porosity may be adjusted by rolling during preparation of the negative electrode. The P may be 0.35 or less, specifically 0.1 to 0.35 or 0.2 to 0.35, more specifically 0.22 to 0.3, still more specifically 0.24 to 0.3, and most specifically 0.25 to 0.3. In a case in which the porosity P of the negative electrode active material layer satisfies the above-described range, the energy density, the capacity characteristics, and electrolyte impregnability may be improved simultaneously. Also, 1-P in the present invention means a ratio of the actual negative electrode active material excluding the ratio of the pores in the negative electrode active material layer.

Also, in Equation 1, ST (unit: μm) means a "thickness of the separator". In the present invention, the thickness of the separator means a thickness including the ceramic coating layer coated on one surface or both surfaces of the separator. The ST may be in a range of 12 μm to 15 μm, specifically 12 μm to 14.5 μm, more specifically 12 μm to 14 μm, still more specifically 12.5 μm to 14 μm, and most specifically 12.5 μm to 13.5 μm. In a case in which the ST satisfies the above-described range, since a cell resistance value may be minimized while preventing a short circuit between the positive electrode and the negative electrode, the life characteristics and the output characteristics of the lithium secondary battery may be improved.

Furthermore, in Equation 1, $ST_c$ (unit: μm) means a "thickness of the ceramic coating layer in the separator". In the present invention, the thickness of the ceramic coating layer in the separator means a total thickness of the ceramic coating layer coated on one surface or both surfaces of the separator substrate. For example, in a case in which the ceramic coating layer is coated on both surfaces of the separator substrate, it refers to a sum of thicknesses of the coating layers formed on each surface. The $ST_c$ may be 5 μm or less, specifically 0.1 μm to 4.5 μm, more specifically 0.5 μm to 4.5 μm, still more specifically 0.5 μm to 3.5 μm, and most specifically 1 μm to 3 μm. In a case in which the $ST_c$ satisfies the above-described range, low resistance may be achieved and the output characteristics may be improved. In a case in which the $ST_c$ is greater than 5 μm, the distance between the positive electrode and the negative electrode may be increased to degrade the output characteristics of the battery and the side reaction due to the increase in moisture may be increased.

Also, a ceramic coating layer ratio $ST_c/ST$ of the separator of the cylindrical type lithium secondary battery according to the embodiment of the present invention may be in a range of 0.05 to 0.3, specifically 0.06 to 0.3, 0.06 to 0.29, 0.07 to 0.29 or 0.07 to 0.28, more specifically 0.07 to 0.27 or 0.08 to 0.27, still more specifically 0.09 to 0.27, 0.09 to 0.26, 0.09 to 0.25, 0.1 to 0.25 or 0.11 to 0.25, and most specifically 0.11 to 0.24. In a case in which the $ST_c/ST$ satisfies the above-described range, the capacity characteristics and the thermal stability may be improved simultaneously. In a case in which the $ST_c/ST$ is less than 0.05, the possibility of ignition may increase, and in a case in which the $ST_c/ST$ is greater than 0.3, it may be difficult to reduce resistance and life performance may be degraded.

Thus, the numerator of Equation 1 in the present invention means the reaction area of the negative electrode active material layer, and a denominator is a value proportional to the ceramic coating layer ratio of the separator, wherein since the reaction area and the ceramic coating layer ratio of the separator are mutually adjusted such that the X defined by Equation 1 satisfies a range of 7 m² to 16 m², a problem was solved in which the thermal safety is deteriorated due to the increase in total heat generation which occurs when the high proportion of the natural graphite is included in the negative electrode active material of the large-sized cylindrical type lithium secondary battery.

Next, each component of the cylindrical type lithium secondary battery according to the present invention will be described in more detail.

The cylindrical type lithium secondary battery according to the present invention includes an electrode assembly including a positive electrode, a negative electrode, and a separator disposed between the positive electrode and the negative electrode, and a battery can including an electrolyte.

## (1) Electrode Assembly

An electrode assembly according to the present invention includes a positive electrode, a negative electrode, and a separator disposed between the positive electrode and the negative electrode.

The electrode assembly may be formed by sequentially stacking a positive electrode, a separator, and a negative electrode, and the positive electrode and the negative electrode may be mutually insulated by the separator.

Specifically, the electrode assembly may be one in which a positive electrode, a separator, and a negative electrode are sequentially stacked and wound in one direction.

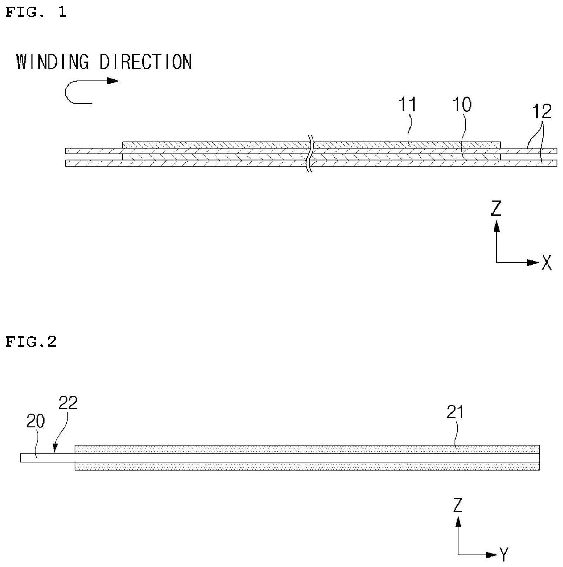

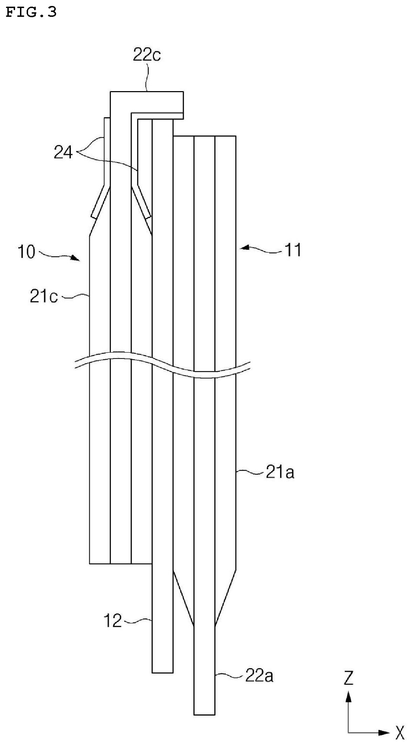

A stacked structure before winding of an electrode assembly according to an embodiment of the present invention is illustrated in FIG. 1, a cross-sectional structure of an electrode plate (positive electrode or negative electrode) according to an embodiment of the present invention is illustrated in FIG. 2, and a structure of an electrode assembly according to an embodiment of the present invention is illustrated in FIG. 3.

Referring to FIGS. 1 and 2, an electrode assembly A of the present invention may be prepared by winding a stack, which is formed by sequentially stacking a separator 12, a positive electrode 10, a separator 12, and a negative electrode 11 at least once in one direction X.

In this case, the positive electrode 10 and the negative electrode 11 each have a structure in which an active material layer 21 is formed on a sheet-shaped current collector 20, and may include a non-coating portion 22 in which the active material layer 21 is not formed in a partial region of the current collector 20.

If the positive electrode 10 and the negative electrode 11, which include the non-coating portion 22 as described above, are used, a battery having a structure, in which a separate electrode tab is not included and at least a portion of the non-coating portions of the positive electrode 10 and the negative electrode 11 defines an electrode tab, may be achieved.

Specifically, the non-coating portion 22 may be formed long along the winding direction X on one side end of the current collector 20, and the non-coating portion may function as an electrode tab by bonding a current collecting plate to each of the non-coating portion of the positive electrode and the non-coating portion of the negative electrode and connecting the current collecting plate to an electrode terminal.

For example, a battery, in which the non-coating portion of the positive electrode and the non-coating portion of the negative electrode function as electrode tabs, may be prepared through the following method. First, the separator, the positive electrode, the separator, and the negative electrode are sequentially stacked such that the non-coating portion of the positive electrode and the non-coating portion of the negative electrode are disposed in opposite directions to each other and then wound in one direction to prepare a jelly-roll-type electrode assembly. Then, after bending the non-coating portion of the positive electrode and the non-coating portion of the negative electrode toward a winding center C, current collecting plates are welded and bonded to the non-coating portion of the positive electrode and the non-coating portion of the negative electrode, respectively, and a battery is prepared by connecting the current collecting plates to the electrode terminals. Since the current collecting plate has a larger cross-sectional area than a strip-type electrode tab and resistance is inversely proportional to a cross-sectional area of a passage through which current flows, cell resistance may be significantly reduced when a secondary battery is formed in the above-described structure.

The positive electrode and negative electrode non-coating portions may be processed in a form of a plurality of independently bendable segments, and at least a portion of the plurality of segments may be bent toward the winding center C of the electrode assembly.

The segments may be formed by processing the current collectors of the positive electrode and the negative electrode through a metal foil cutting process such as laser notching, ultrasonic cutting, and punching.

In a case in which the non-coating portions of the positive electrode and the negative electrode are processed in the form of the plurality of segments, deformation or damage of the non-coating portions may be prevented by reducing stress that is applied to the non-coating portions during bending, and welding characteristics with the current collecting plate may be improved.

The current collecting plate and the non-coating portion are generally bonded by welding, wherein, in order to improve the welding characteristics, a strong pressure must be applied to a welding region of the non-coating portion to bend the non-coating portion as flat as possible. However, a shape of the non-coating portion may be irregularly distorted and deformed during this bending process, and the deformed portion may contact the electrode of opposite polarity to cause an internal short circuit or cause micro-cracks in the non-coating portion. However, if the non-coating portions of the positive electrode and the negative electrode are processed in the form of the plurality of independently bendable segments, the stress applied to the non-coating portions during bending is mitigated so that the deformation and damage of the non-coating portions may be minimized.

Also, in a case in which the non-coating portion is processed in the form of segments as described above, an overlap occurs between the plurality of segments during bending, and, as a result, welding strength with respect to the current collecting plate is increased and a problem, in which, when the latest technique, such as laser welding, is used, a laser beam penetrates into the electrode assembly to ablate the separator or the active material, may be prevented. Preferably, at least a portion of the plurality of bent segments may be overlapped on an upper end and a lower end of the electrode assembly, and the current collecting plate may be bonded to the overlapped plurality of segments.

As illustrated in FIG. 3, the electrode assembly according to the present invention may be formed in a structure in which an insulation layer 24 is additionally formed on the positive electrode 10. Specifically, the insulation layer 24 may be formed to cover a portion of a positive electrode active material layer and a portion of the non-coating portion along a direction parallel to the winding direction of the electrode assembly.

With respect to a battery having a tab-less structure in which a non-coating portion 22c of the positive electrode 10 and a non-coating portion 22a of the negative electrode 11 are used as electrode tabs, an electrode assembly is formed such that the positive electrode 10 protrudes above the separator 12 and the negative electrode 11 protrudes below the separator 12, and the protruding positive electrode 10 and/or negative electrode 11 are bent and then bonded to the current collecting plate. In a case in which the positive electrode 10 or the negative electrode 11 is bent as described above, the current collector of the positive electrode 10 or the negative electrode 11 crosses the separator and is disposed close to the electrode having an opposite polarity, and, as a result, there is a possibility that the positive electrode and the negative electrode are electrically contacted to cause an internal short circuit. However, as illustrated in FIG. 3, in a case in which the insulation layer 24 covering the portions of the positive electrode active material layer and the non-coating portion is formed, since the electrical contact between the positive electrode 10 and the negative electrode 11 may be prevented by the insulation layer 24, occurrence of a short circuit in the battery may be prevented.

Preferably, the insulation layer 24 may be provided on at least one side of the current collector of the positive electrode 10, and preferably, may be provided on both sides of the positive electrode 10.

Also, the insulation layer 24 may be formed in a region of the positive electrode 10 which may face an active material layer 21a of the negative electrode 11. For example, on a surface of the non-coating portion 22c of the positive electrode 10 which faces the negative electrode 11 after being bent, the insulation layer 24 may be formed by extending to an end of the non-coating portion 22c. However, with respect to a surface opposite to the surface facing the negative electrode 11 after being bent, it is desirable that the insulation layer 24 is formed only on a portion of the non-coating portion 22c, for example, before a bending point of the non-coating portion 22c. The reason for this is that, in a case in which the insulation layer 24 is formed on an entire region of the non-coating portion of the surface opposite to the surface facing the negative electrode 11, since an electrical contact with the current collecting plate is not possible, it may not function as the electrode tab.

The insulation layer 24 may be used as long as it may be attached to the positive electrode while ensuring insulation performance, and a material or component thereof is not particularly limited. For example, the insulation layer may be an insulation coating layer or an insulation tape, and the insulation coating layer may include an organic binder and inorganic particles. In this case, the organic binder, for example, may be a styrene-butadiene rubber (SBR), and the inorganic particles may be alumina oxide, but are not limited thereto.

Hereinafter, each component of the electrode assembly of the present invention will be described in more detail.

**Positive Electrode**

The positive electrode may be prepared by a method in which a positive electrode slurry is applied to one side or both sides of a sheet-shaped positive electrode collector, a solvent of the positive electrode slurry is removed through a drying process, and rolling is performed. A positive electrode including a non-coating portion may be prepared by a method in which the positive electrode slurry is not applied to a partial region of the positive electrode collector, for example, one end of the positive electrode collector when the positive electrode slurry is applied.

Also, the positive electrode slurry may be prepared by dispersing a positive electrode material according to the present invention in a solvent such as dimethyl sulfoxide (DMSO), isopropyl alcohol, N-methylpyrrolidone (NMP), acetone, or water.

The positive electrode thus prepared may include a positive electrode collector; and a positive electrode active material layer, and the positive electrode active material layer may include a positive electrode active material.

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 $\mu$m to 500um, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may be disposed on the positive electrode collector, and may specifically be disposed on one side or both sides of the positive electrode collector. The positive electrode active material layer may have a single-layer structure or a multilayer structure of two or more layers.

Positive electrode active materials commonly used in the art may be used as the above positive electrode active material, and a type thereof is not particularly limited. The positive electrode active material is a compound capable of reversibly intercalating and deintercalating lithium, wherein the positive electrode active material may specifically include a lithium transition metal composite oxide including lithium and at least one transition metal selected from the group consisting of nickel, cobalt, manganese, and aluminum, preferably, a lithium transition metal composite oxide including lithium and transition metal containing nickel, cobalt, and manganese. More specifically, the lithium transition metal composite oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-nickel-cobalt-based oxide (e.g., $LiNi_{1-Y1}Co_{Y1}O_2$ (where $0<Y1<1$), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$), etc.), lithium-nickel-manganese-cobalt-based oxide (e.g., $Li(Ni_pCo_qMn_{r1})O_2$ (where $0<p<1$, $0<q<1$, $0<r1<1$, and $p+q+r1=1$) or $Li(Ni_{p1}Co_{q1}Mn_{r2})O_4$ (where $0<p1<2$, $0<q1<2$, $0<r2<2$, and $p1+q1+r2=2$), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein $0<p2<1$, $0<q2<1$, $0<r3<1$, $0<S2<1$, and $p2+q2+r3+S2=1$), etc.), and any one thereof or a compound of two or more thereof may be included. Among these materials, in terms of the improvement of capacity characteristics and stability of the battery, the lithium transition metal composite oxide may be $LiCoO_2$, $LiMnO_2$, $LiNiO_2$, lithium nickel cobalt manganese-based oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or lithium nickel cobalt aluminum-based oxide (e.g., $Li(Ni_{0.8}Co_{0.15}Al_{0.05})O_2$, etc.), and, in consideration of a significant improvement effect due to the control of types and content ratios of components constituting the lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

Preferably, the positive electrode active material may include a lithium transition metal composite oxide including nickel, cobalt, manganese, and aluminum.

Also, the positive electrode active material may be a single-particle type particle, a secondary particle, or a mixture thereof, and among these, it is more preferable to use a mixture of the single-particle type particle and the secondary particle. The positive electrode active material in a form of a single particle has an advantage of minimizing gas generation when used because it undergoes fewer side reactions with the electrolyte solution than the positive electrode active material in a form of a secondary particle. With respect to a large-sized battery with large capacity, an amount of gas generated during charge and discharge increases rapidly in comparison to a small-sized battery, and as a result, there is a problem in that life characteristics are degraded. Thus, it is desirable to improve the life characteristics by using the positive electrode active material in the form of a single particle which may minimize the gas generation. However, since the positive electrode active material in the form of a single particle has high resistance, there is a problem in that output and capacity are reduced when it is used alone. Therefore, in consideration of the life, output, and capacity characteristics, it is desirable to use a mixture of the single-particle type particle and the secondary particle in an appropriate ratio as the positive electrode active material. For example, the positive electrode active material may be used by mixing the single-particle type particle :the secondary particle in a weight ratio of 50:50 to 90:10, preferably 50:50 to 80:20. In a case in which the mixing ratio of the single-particle type particle to the secondary particle satisfies the above range, excellent electrochemical properties may be achieved even in a large-sized battery having a diameter of greater than 40 mm. Specifically, in a case in which an amount of the single-particle type particle is less than 50 wt%, an effect of suppressing gas generation and improving lifetime is insignificant, and in a case in which the amount of the single-particle type particle is greater than 90 wt%, the output characteristics may be degraded due to excessively high resistance.

The positive electrode active material may be included in an amount of 80 wt% to 99 wt%, preferably, 92wt% to 98.5wt% based on a total weight of the positive electrode active material layer in consideration of exhibition of sufficient capacity of the positive electrode active material.

The positive electrode active material layer may optionally further include at least one of a positive electrode conductive agent and a positive electrode binder.

The positive electrode conductive agent is used to provide conductivity to the electrode, wherein any conductive agent may be used without particular limitation as long as it has electron conductivity without causing chemical changes in the battery. Specific examples of the positive electrode conductive agent may be graphite such as natural graphite or artificial graphite; a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The positive electrode conductive agent may be typically included in an amount of 1 wt% to 30 wt%, preferably 1 wt% to 20 wt%, and more preferably 1 wt% to 10 wt% based on the total weight of the positive electrode active material layer.

The positive electrode binder improves adhesion between positive electrode material particles and adhesion between the positive electrode material and the positive electrode collector, wherein specific examples of the positive electrode binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The positive electrode binder may be included in an amount of 1 wt% to 30 wt%, preferably 1 wt% to 20 wt%, and more preferably 1 wt% to 10 wt% based on the total weight of the positive electrode active material layer.

**Negative Electrode**

The negative electrode may be prepared by a method in which a negative electrode slurry is applied to one side or both sides of a sheet-shaped negative electrode collector, a solvent of the negative electrode slurry is removed through a drying process, and rolling is performed. A negative electrode including a non-coating portion may be prepared by a method in which the negative electrode slurry is not applied to a partial region of the negative electrode collector, for example, one end of the negative electrode collector when the negative electrode slurry is applied.

The negative electrode slurry may be prepared by dispersing the negative electrode active material in a solvent such as distilled water, ethanol, methanol, or isopropyl alcohol.

Also, the negative electrode may be prepared by casting the negative electrode slurry on a separate support and then laminating a film separated from the support on the negative electrode collector.

The negative electrode thus prepared may include a negative electrode collector; and a negative electrode active material layer, and the negative electrode active material layer may include a negative electrode active material.

The negative electrode collector is not particularly limited as long as it has high conductivity without causing chemical changes in the battery, and for example, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector. The negative electrode collector may typically have a thickness of 3 $\mu$m to 500 $\mu$m.

Also, similar to the positive electrode collector, microscopic irregularities may be formed on the surface of the negative electrode collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer may be disposed on the negative electrode collector, and may specifically be disposed on one side or both sides of the negative electrode collector. The negative electrode active material layer may have a single-layer structure or a multilayer structure of two or more layers.

A compound capable of reversibly intercalating and deintercalating lithium may be used as the negative electrode active material. As a specific example, artificial graphite and natural graphite may be included.

Also, any one of a carbonaceous material such as graphitized carbon fibers and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic material and the carbonaceous material, such as a Si-C composite or a Sn-C composite, or a mixture of two or more thereof may be additionally included.

The negative electrode active material may be included in an amount of 80 wt% to 99 wt% based on a total weight of the negative electrode active material layer.

The negative electrode active material layer may optionally further include a negative electrode conductive agent and a negative electrode binder in addition to the negative electrode active material.

The negative electrode conductive agent is used to provide conductivity to the negative electrode, wherein any conductive agent may be used without particular limitation as long as it has electron conductivity without causing chemical changes in the battery. Specific examples of the negative electrode conductive agent may be graphite such as natural graphite or artificial graphite; a carbon based-material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The negative electrode conductive agent may be typically included in an amount of 1 wt% to 30 wt%, preferably 1 wt% to 20 wt%, and more preferably 1 wt% to 10 wt% based on the total weight of the negative electrode active material layer.

The negative electrode binder improves adhesion between the Negative Electrode active material particles and adhesion between the negative electrode active material and the negative electrode collector. Specific examples of the negative electrode binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluoro rubber, and various copolymers thereof, and any one thereof or a mixture of two or more thereof may be used. The negative electrode binder may be included in an amount of 1 wt% to 30 wt%, preferably 1 wt% to 20 wt%, and more preferably 1 wt% to 10 wt% based on the total weight of the negative electrode active material layer.

**Separator**

The separator refers to one that separates the negative electrode and the positive electrode by being disposed between the positive electrode and the negative electrode and provides a movement path of lithium ions.

A separator for a secondary battery according to the present invention includes a separator substrate and a ceramic coating layer formed on the separator substrate.

The separator substrate is not particularly limited as long as it is used in a known separator, and a separator having high moisture-retention ability for an electrolyte as well as low resistance to the transfer of electrolyte ions is preferable. The separator substrate may include a porous substrate. As a specific example, the separator substrate may be a microporous membrane or a nonwoven fabric composed of one or more components selected from the group consisting of a polyolefin-based resin, a fluorine-based resin, a polyester-based resin, a polyacrylonitrile resin, and a cellulose-based material. More specifically, the separator substrate may include a microporous membrane or a nonwoven fabric composed of one or more components selected from the group consisting of polyethylene, polypropylene, polyvinylidene fluoride, polytetrafluoroethylene, polyethylene terephthalate, and polybutylene terephthalate.

A thickness of the separator substrate may be in a range of 1 $\mu$m to 20 $\mu$m, specifically 3 $\mu$m to 18 $\mu$m, more specifically 5 $\mu$m to 17 $\mu$m, and still more specifically 7 $\mu$m to 13 $\mu$m.

The ceramic coating layer may be formed on one surface or both surfaces of the separator substrate to secure heat resistance or mechanical strength of the separator. The ceramic coating layer may include inorganic particles and a ceramic coating layer binder.

In a case in which the inorganic particles are included, since thermal stability of the separator may be increased, shrinkage of the separator in a high-temperature environment may be suppressed and ignition of a secondary battery cell caused thereby may be prevented. The inorganic particles may include at least one inorganic particle selected from the group consisting of cerium oxide ($CeO_2$), aluminum oxide ($Al_2O_3$), boehmite, calcium carbonate ($CaCO_3$), barium carbonate ($BaCO_3$), magnesium oxide (MgO), magnesium ($Mg(OH)_2$), aluminum hydroxide ($Al(OH)_3$), clay, silica ($SiO_2$), zirconia ($ZrO_2$), titanium dioxide ($TiO_2$), and zinc oxide (ZnO), and may specifically include at least one of cerium oxide ($CeO_2$) and aluminum oxide ($Al_2O_3$).

The ceramic coating layer binder is included to improve adhesive properties and heat resistance of the ceramic coating layer, wherein it is not particularly limited as long as it is a component that has an excellent binding force with the electrode laminated on the separator and a binding force with ceramic powder and is not easily dissolved by the electrolyte solution. Specifically, the ceramic coating layer binder may include at least one polymer selected from the group consisting of polyacrylic acid, polymethacrylic acid, ethylene-acrylic acid copolymer, ethylene-methacrylic acid copolymer, butadiene-acrylic acid copolymer, butadiene-methacrylic acid copolymer, polyvinyl sulfonate, chlorosulfonated polyethylene, perfluorosulfonated ionomer, sulfonated polystyrene, styrene-acrylic acid copolymer, and sulfonated butyl rubber, or a copolymer including two or more components thereof.

**(2) Electrolyte**

The electrolyte according to the present invention includes a lithium salt and an organic solvent.

The lithium salt may be used without particular limitation as long as it is a compound capable of providing lithium ions used in the lithium secondary battery. Specifically, the lithium salt may include at least one selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, LiFSI, or $LiB(C_2O_4)_2$, preferably at least one selected from the group consisting of $LiPF_6$, $LiClO_4$, $LiBF_4$, and LiFSI. The lithium salt may have a concentration of 1.0 M to 1.5 M, preferably 1.0 M to 1.4 M, and more preferably 1.1 M to 1.4 M. Since the electrolyte may have appropriate conductivity and viscosity when the concentration of the lithium salt is included within the above range, excellent performance of the electrolyte may be obtained and lithium ions may effectively move.

The organic solvent includes ethylene carbonate. In this case, the lithium salt may be smoothly dissociated and may be decomposed during battery operation to stably form a solid electrolyte interface (SEI) film on a surface of the negative electrode.

The organic solvent may include the ethylene carbonate in an amount of 5 vol% to 35 vol%, preferably 10 vol% to 80 vol%, and more preferably 15 vol% to 25 vol%. In a case in which the above range is satisfied, a sufficiently robust SEI film may be formed on the surface of the negative electrode.

The lithium secondary battery subjected to formation may include ethylene carbonate and a decomposition product of the ethylene carbonate.

In this case, the decomposition product of the ethylene carbonate may refer to a decomposition product of ethylene carbonate remaining in the electrolyte among products of the ethylene carbonate decomposed during a formation process of the lithium secondary battery.

Specifically, the decomposition product of the ethylene carbonate may be at least one selected from the group consisting of diethyl carbonate (DEC), dimethyl-2,5-dioxahexane dicarboxylate (DMDOHC), ethylmethyl-2,5-dioxahexane dicarboxylate (EMDOHC), and diethyl-2,5-dioxahexane dicarboxylate (DEDOHC).

The organic solvent may further include dimethyl-2,5-dioxahexane dicarboxylate (DMDOHC).

In a case in which the organic solvent further includes dimethyl-2,5-dioxahexane dicarboxylate (DMDOHC), the organic solvent may include the dimethyl-2,5-dioxahexane dicarboxylate (DMDOHC) in an amount of 0.5 vol% to 3.0 vol%, preferably 1.0 vol% to 2.0 vol%, and more preferably 1.3 vol% to 1.5 vol%.

In order to improve ion conductivity of the battery, cation transference number, and life characteristics of the battery, suppress a reduction in battery capacity, and improve discharge capacity of the battery, the electrolyte may further include an additive in addition to the above electrolyte components.

For example, the additive may include at least one additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

More specifically, the additive may be at least one selected from the group consisting of vinylene carbonate (VC), vinyl ethylene carbonate, fluoroethylene carbonate (FEC), 1,3-propane sultone (PS), 1,4-butane sultone, ethane sultone, 1,3-propene sultone (PRS), 1,4-butene sultone, 1-methyl-1,3-propenesultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (Lithium bis(fluorosulfonyl)imide, LiFSI), $LiN(SO_2CF_3)_2$ (lithium bis(trifluoromethane sulfonyl) imide, LiTFSI), $LiPO_2F_2$, LiODFB, LiBOB(lithium bis(oxalato)borate, $LiB(C_2O_4)_2$), and $LiBF_4$, and may preferably be vinylene carbonate (VC).

The electrolyte may include the additive in an amount of 2 wt% to 5.5 wt%, preferably 2 wt% to 5 wt%, and more preferably 2 wt% to 4 wt%. If the amount of the additive is less than 2wt%, effects of improving low-temperature output, high-temperature storage characteristics, and high-temperature life characteristics of the battery are insignificant, and, if the amount of the additive is greater than 5.5 wt%, there is a possibility that a side reaction in the electrolyte occurs excessively during charge and discharge of the battery. Particularly, since the other additives may not be sufficiently decomposed at high temperatures when an excessive amount of the additives for forming an SEI layer is added, the other additives may be present in the form of an unreacted material or precipitates in the electrolyte at room temperature. Accordingly, a side reaction may occur in which life or resistance characteristics of the secondary battery are degraded.

In a case in which the amount of the additive satisfies the above range, low-temperature output characteristics, high-temperature storage characteristics, and high-temperature life characteristics of the battery may be improved, a side reaction in the electrolyte may be suppressed during charge and discharge of the battery, and life characteristics and high-temperature life characteristics of the battery may be improved by further improving the cation transference number and ion conductivity in the electrolyte.

**(3) Battery Can**

The battery can may be a prismatic can, a cylindrical battery can, or a pouch-type battery can which is used in the art, and may preferably be a cylindrical battery can. Specifically, the battery can may be a can-type battery can including a battery can, in which the electrode assembly and the electrolyte are accommodated, and a sealing body sealing an open end of the battery can.

Preferably, the lithium secondary battery according to the present invention may be a cylindrical type lithium secondary battery including a cylindrical battery can, and more preferably, may be a large-sized cylindrical type battery having a form factor ratio (R/H, defined as a value obtained by dividing a diameter of the lithium secondary battery by a height thereof, that is, a ratio of the diameter (R) of the lithium secondary battery to the height (H) of the lithium secondary battery) of 0.4 or more. Herein, the form factor means a value representing the diameter and height of the cylindrical type lithium secondary battery.

Specifically, the ratio of the diameter (R) of the lithium secondary battery to the height (H) of the lithium secondary battery may be 0.4 or more, preferably 0.4 to 0.8, and more preferably 0.5 to 0.8. In a case in which the above range is satisfied, high-capacity characteristics may be achieved as a large-sized cylindrical type lithium secondary battery.

The lithium secondary battery according to the present invention, for example, may be a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), or a 4680 cell (diameter 46 mm, height 80 mm, form factor ratio 0.575). In a number representing the form factor, first two numbers represent the diameter of the lithium secondary battery, and next two or three numbers represent the height of the lithium secondary battery.

Next, the lithium secondary battery according to the present invention will be described.

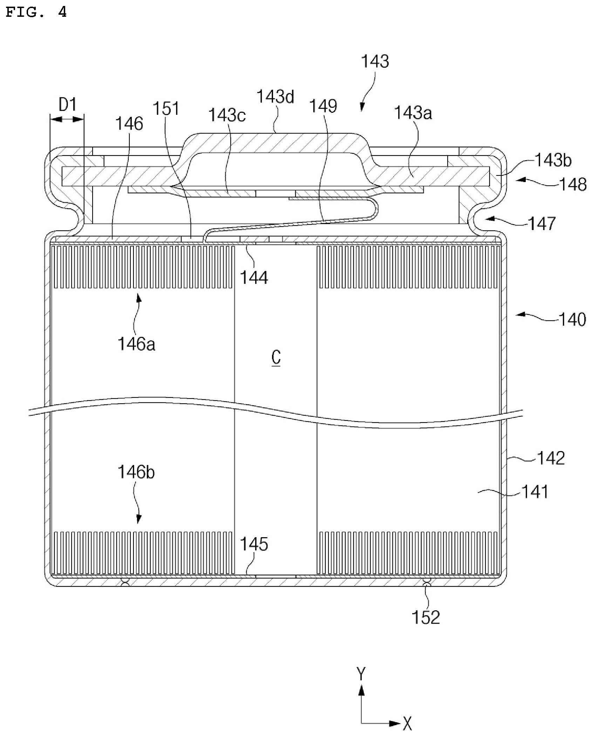

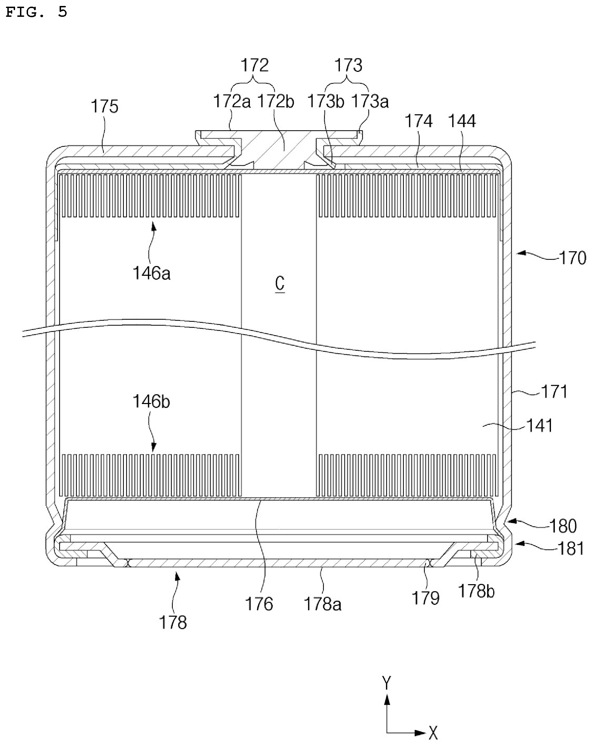

Examples of the lithium secondary battery according to the present invention are disclosed in FIGS. 4 and 5. Hereinafter, with reference to FIGS. 4 and 5, the lithium secondary battery according to the present invention will be described. However, FIGS. 4 and 5 only show one embodiment of the present invention, and a structure of the battery of the present invention is not limited to the scope disclosed in FIGS. 4 and 5.

FIG. 4 illustrates a cross-sectional view of a lithium secondary battery according to an embodiment of the present invention.

Referring to FIG. 4, a lithium secondary battery 140 according to the present invention includes an electrode assembly 141, a battery can 142 in which the electrode assembly 141 and an electrolyte (not shown) are accommodated, and a sealing body 143 sealing an open end of the battery can 142.

In this case, the electrode assembly is one in which the positive electrode, the separator, and the negative electrode are sequentially stacked and wound in one direction. Also, a positive electrode and a negative electrode of the electrode assembly each include a non-coating portion on which an active material layer is not formed, and may be stacked and wound such that the non-coating portion of the positive electrode and the non-coating portion of the negative electrode are disposed at the upper end and the lower end of the electrode assembly, respectively. Since the electrode assembly has been described above, only components other than the electrode assembly will be described below.

The battery can 142 is a can-type container having an upper open end, wherein it is formed of a conductive metallic material such as aluminum or steel. The battery can accommodates the electrode assembly 141 in an inner space through the upper open end and also accommodates the electrolyte (not shown) together.

It is desirable that the lithium secondary battery 140 of the present invention does not include a current interruption device (CID).

As illustrated in FIG. 4, the battery can 142 is electrically connected to a non-coating portion 146b of the negative electrode, and may function as a negative electrode terminal that contacts an external power source to transfer a current applied from the external power source to the negative electrode.

If necessary, a beading portion 147 and a crimping portion 148 may be included at an upper end of the battery can 142. The beading portion 147 may be formed by pressing an outer circumferential surface of the battery can 142 to a distance D1. The beading portion 147 prevents the electrode assembly 141 accommodated inside the battery can 142 from escaping through an upper end opening of the battery can 142, and may function as a support on which the sealing body 143 is stably placed.

The crimping portion 148 may be formed on an upper portion of the beading portion 147 and has an extended and bent shape to surround an outer circumferential surface of a cap plate 143a disposed on the beading portion 147 and a portion of an upper surface of the cap plate 143a.

Next, the sealing body 143 is for sealing the open end of the battery can 142, wherein it includes the cap plate 143a and a first gasket 143b providing airtightness between the cap plate 143a and the battery can 142 and having insulation properties, and, if necessary, may further include a connection plate 143c electrically and mechanically bonded to the cap plate 143a. The cap plate 143a may be pressed onto the beading portion 147 formed in the battery can 142 and may be fixed by the crimping portion 148.

The cap plate 143a is a component formed of a conductive metallic material, wherein it covers the upper end opening of the battery can 142. The cap plate 143a is electrically connected to the positive electrode of the electrode assembly 141, and is electrically insulated from the battery can 142 through the first gasket 143b. Thus, the cap plate 143a may function as a positive electrode terminal of the lithium secondary battery. The cap plate 143a may include a protrusion 143d protruding upward from the center C, and the protrusion 143d may contact an external power source to allow a current to be applied from the external power source.

The first gasket 143b may be disposed between the cap plate 143a and the crimping portion 148 to secure airtightness of the battery can 142 and to electrically insulate the battery can 142 and the cap plate 143a.

The lithium secondary battery 140 according to the present invention may further include current collecting plates 144 and 145, if necessary. The current collecting plates are respectively bonded to a non-coating portion 146a of the positive electrode and the non-coating portion 146b of the negative electrode, and connected to the electrode terminals (i.e., the positive electrode terminal and the negative electrode terminal).

Specifically, the lithium secondary battery 140 according to the present invention may include the first current collecting plate 144 bonded to an upper portion of the electrode assembly 141 and the second current collecting plate 145 bonded to a lower portion of the electrode assembly 141.

The first current collecting plate 144 and/or the second current collecting plate 145 may be further included.

The first current collecting plate 144 is bonded to the upper portion of the electrode assembly 141. The first current collecting plate 144 is formed of a conductive metallic material, such as aluminum, copper, and nickel, and is electrically connected to the non-coating portion 146a of the positive electrode. A lead 149 may be connected to the first current collecting plate 144. The lead 149 may extend upward from the electrode assembly 141 and may be bonded to the connection plate 143c or may be directly bonded to a lower surface of the cap plate 143a. The lead 149 and other components may be bonded through welding. Preferably, the first current collecting plate 144 may be formed in one piece with the lead 149. In this case, the lead 149 may have a plate shape extending outward from a center of the first current collecting plate 144.

The first current collecting plate 144 is bonded to an end of the non-coating portion 146a of the positive electrode, and the bonding, for example, may be performed by a method such as laser welding, resistance welding, ultrasonic welding, and soldering.

The second current collecting plate 145 is bonded to the lower portion of the electrode assembly 141. The second current collecting plate 145 is formed of a conductive metallic material, such as aluminum, copper, and nickel, and is electrically connected to the non-coating portion 146b of the negative electrode. One surface of the second current collecting plate 145 may be bonded to the non-coating portion 146b of the negative electrode, and an opposite surface may be bonded to an inner bottom surface of the battery can 142. In this case, the bonding may be performed by a method such as laser welding, resistance welding, ultrasonic welding, and soldering.

The lithium secondary battery 140 according to the present invention may further include an insulator 146, if necessary. The insulator 146 may be disposed to cover an upper surface of the first current collecting plate 144. Since the insulator 146 covers the first current collecting plate 144, a direct contact between the first current collecting plate 144 and an inner circumferential surface of the battery can 142 may be prevented.

The insulator 146 includes a lead hole 151 so that the lead 149 extending upward from the first current collecting plate 144 may be drawn out. The lead 149 is drawn upward through the lead hole 151 and bonded to a lower surface of the connection plate 143c or the lower surface of the cap plate 143a.

The insulator 146 may be formed of an insulating polymer resin, for example, a polymer resin material such as polyethylene, polypropylene, polyimide, or polybutylene terephthalate.

The lithium secondary battery 140 according to the present invention may further include a venting portion 152 formed on the lower surface of the battery can 142, if necessary. The venting portion 152 corresponds to a region having a thinner thickness than a surrounding region in the lower surface of the battery can 142. Since the venting portion 152 is thin, it is structurally weaker than the surrounding region. Thus, if a pressure in the lithium secondary battery 140 is increased to a certain level or higher, the venting portion 152 is ruptured and gas in the battery case 152 may be discharged to the outside to prevent explosion of the battery.

A cross-sectional view of a lithium secondary battery according to another embodiment of the present invention is illustrated in FIG.5.

Referring to FIG. 5, a lithium secondary battery 170 according to another embodiment of the present invention has different structures of battery can and sealing body in comparison to the lithium secondary battery 140 illustrated in FIG. 4 and has substantially the same configurations of electrode assembly and electrolyte.

Specifically, the lithium secondary battery 170 according to the another embodiment of the present invention includes a battery can 171 through which a rivet terminal 172 is installed. The rivet terminal 172 is installed on a closed surface (upper surface in the drawing) partially closed at one end of the battery can 171. The rivet terminal 172 is riveted to a through hole (first opening of a first end) of the battery can 171 in a state in which an insulating second gasket 173 is disposed therebetween. The rivet terminal 172 is exposed to the outside in a direction opposite to a direction of gravity.

The rivet terminal 172 includes a terminal exposed portion 172a and a terminal insertion portion 172b. The terminal exposed portion 172a is exposed to the outside of the closed surface of the battery can 171. The terminal exposed portion 172a may be located at approximately a center of the partially closed surface of the battery can 171. A maximum diameter of the terminal exposed portion 172a may be formed to be greater than a maximum diameter of the through hole formed in the battery can 171. The terminal insertion portion 172b may be electrically connected to the non-coating portion 146a of the positive electrode through approximately the center of the closed surface of the battery can 171. The terminal insertion portion 172b may be riveted on an inner surface of the battery can 171. That is, an end of the terminal insertion portion 172b may have a shape curved toward the inner surface of the battery can 171. A maximum diameter of the end of the terminal insertion portion 172b may be greater than the maximum diameter of the through hole of the battery can 171.

A lower end surface of the terminal insertion portion 172b may be welded to the first current collecting plate 144 connected to the non-coating portion 146a of the positive electrode. An insulating cap 174 formed of an insulating material may be disposed between the first current collecting plate 144 and the inner surface of the battery can 171. The insulating cap 174 covers an upper portion of the first current collecting plate 144 and an upper edge portion of the electrode assembly 141. Thus, it may prevent a short circuit from being caused by contact between an outer circumferential non-coating portion B3 of the electrode assembly 141 and the inner surface of the battery can 171 having a different polarity. The terminal insertion portion 172b of the rivet terminal 172 may pass through the insulating cap 174 to be welded to the first collector plate 144.

The second gasket 173 is disposed between the battery can 171 and the rivet terminal 172 to prevent an electrical contact between the battery can 171 and the rivet terminal 172 which have opposite polarities to each other. Thus, the upper surface having a substantially flat shape of the battery can 171 may function as a positive electrode terminal of the lithium secondary battery 170.

The second gasket 173 includes a gasket exposed portion 173a and a gasket insertion portion 173b. The gasket exposed portion 173a is disposed between the terminal exposed portion 172a of the rivet terminal 172 and the battery can 171. The gasket insertion portion 173b is disposed between the terminal insertion portion 172b of the rivet terminal 172 and the battery can 171. The gasket insertion portion 173b may be closely attached to the inner surface of the battery can 171 by being deformed together during the riveting of the terminal insertion portion 172b. The second gasket 173, for example, may be formed of a polymer resin having insulation properties.

The gasket exposed portion 173a of the second gasket 173 may have an extended shape to cover an outer circumferential surface of the terminal exposed portion 172a of the rivet terminal 172. In a case in which the second gasket 173 covers the outer circumferential surface of the rivet terminal 172, occurrence of a short circuit in a process of bonding an electrical connection component, such as a bus bar, to the upper surface of the battery can 171 and/or to the rivet terminal 172 may be prevented. Although not shown in the drawing, the gasket exposed portion 173a may have an extended shape to cover not only the outer circumferential surface of the terminal exposed portion 172a but also a portion of an upper surface thereof.

In a case in which the second gasket 173 is formed of the polymer resin, the second gasket 173 may be bonded to the battery can 171 and the rivet terminal 172 by heat fusion. In this case, airtightness at a bonding interface between the second gasket 173 and the rivet terminal 172 and at a bonding interface between the second gasket 173 and the battery can 171 may be enhanced. In a case in which the gasket exposed portion 173a of the second gasket 173 has a shape extending to the upper surface of the terminal exposed portion 172a, the rivet terminal 172 may be integrally bonded to the second gasket 173 by insert injection molding.

A region 175 other than regions occupied by the rivet terminal 172 and the second gasket 173 in the upper surface of the battery can 171 corresponds to a negative electrode terminal having a polarity opposite to that of the rivet terminal 172.

A second current collecting plate 176 is bonded to the lower portion of the electrode assembly 141. The second current collecting plate 176 is formed of a conductive metallic material, such as aluminum, steel, copper, and nickel, and is electrically connected to the non-coating portion 146b of the negative electrode.

Preferably, the second current collecting plate 176 is electrically connected to the battery can 171. For this purpose, at least a portion of an edge portion of the second current collecting plate 176 may be fixed by being disposed between the inner surface of the battery can 171 and the first gasket 178b. In one example, the at least a portion of the edge portion of the second current collecting plate 176 may be fixed to a beading portion 180 by welding while being supported on a lower end surface of the beading portion 180 formed at a lower end of the battery can 171. In a modified example, the at least a portion of the edge portion of the second current collecting plate 176 may be directly welded to an inner wall surface of the battery can 171.

The second current collecting plate 176 may have a plurality of irregularities (not shown) which are radially formed on a surface facing the non-coating portion 146b. In a case in which the irregularities are formed, the second current collecting plate 176 may be pressed to press the irregularities into the non-coating portion 146b.

Preferably, the second current collecting plate 176 and an end of the non-coating portion 146b may be bonded by welding, for example, laser welding.

A sealing body 178 sealing a lower open end of the battery can 171 includes a cap plate 178a and a first gasket 178b. The first gasket 178b electrically separates the cap plate 178a and the battery can 171. A crimping portion 181 fixes an edge of the cap plate 178a and the first gasket 178b together. A venting portion 179 is included in the cap plate 178a. A configuration of the venting portion 179 is substantially the same as that of the above-described embodiment.

Preferably, the cap plate 178a is formed of a conductive metallic material. However, since the first gasket 178b is disposed between the cap plate 178a and the battery can 171, the cap plate 178a has no electrical polarity. The sealing body 178 functions to seal the lower open end of the battery can 171 and to discharge gas when an internal pressure of the battery cell 170 is increased above a critical value.

Preferably, the rivet terminal 172 electrically connected to the non-coating portion 146a of the positive electrode is used as the positive electrode terminal. Also, the portion 175 excluding the rivet terminal 172 in the upper surface of the battery can 171, which is electrically connected to the non-coating portion 146b of the negative electrode through the second current collecting plate 176, is used as the negative electrode terminal. As described above, in a case in which the two electrode terminals are disposed on the upper portion of the lithium secondary battery, it is possible to dispose electrical connection components, such as a bus bar, on only one side of the lithium secondary battery 170. This may lead to simplification of a battery pack structure and improvement of energy density. Furthermore, since the portion 175 used as the negative electrode terminal has a substantially flat shape, a sufficient bonding area may be secured for bonding the electrical connection components such as a bus bar. Accordingly, the lithium secondary battery 170 may reduce resistance at a bonding portion of the electrical connection component to a desired level.

In a case in which a lithium secondary battery is formed in a tab-less structure as described above, since the battery having the tab-less structure has less current concentration than a conventional battery having electrode tabs, it may effectively reduce heat generation in the battery, and, accordingly, an effect of improving thermal stability of the battery may be obtained.

Next, a battery pack including the lithium secondary battery according to the present invention as a unit cell will be described.

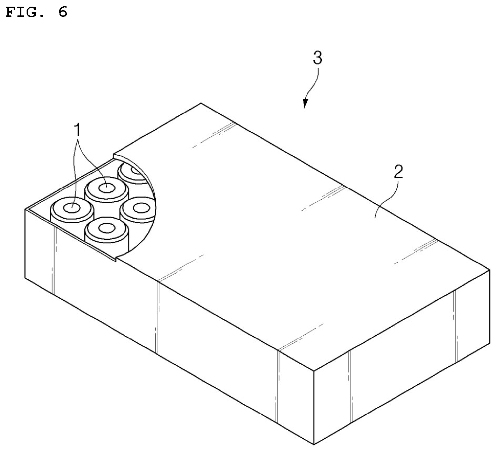

The lithium secondary battery of the present invention as described above may be used as a unit cell to prepare a battery pack. A configuration of a battery pack according to an embodiment of the present invention is schematically illustrated in FIG. 6. Referring to FIG. 6, a battery pack 3 according to an embodiment of the present invention includes an assembly, in which lithium secondary batteries 1 are electrically connected, and a pack housing 2 accommodating the assembly. The lithium secondary battery 1 is the lithium secondary battery according to the above-described embodiment. In the drawing, for convenience of illustration, parts, such as a bus bar for electrically connecting the lithium secondary batteries 1, a cooling unit, and an external terminal, are omitted.

The battery pack 3 may be mounted in a vehicle. The vehicle, for example, may be an electric vehicle, a hybrid vehicle, or a plug-in hybrid vehicle. The vehicle includes a four-wheeled vehicle or a two-wheeled vehicle.

Hereinafter, the present invention will be described in more detail, according to specific examples.

**Preparation Examples. Preparation of Examples 1 to 7 and Comparative Examples 1 to 5**

**Example 1.**

<Preparation of Negative Electrode Active Material>

Artificial graphite (BET: 0.7 m$^2$/g) was used as a first negative electrode active material, natural graphite (BET: 2.1 m$^2$/g) was used as a second negative electrode active material, and a negative electrode active material was prepared by mixing the artificial graphite and the natural graphite in a weight ratio of 0.5:0.5.

<Preparation of Negative Electrode>

The negative electrode active material prepared above, SW-CNT as a conductive agent, and CMC, as a binder, were mixed in a weight ratio of 98.95:0.05:1, and water was added to prepare a negative electrode slurry. Subsequently, the negative electrode slurry was applied onto a copper current collector, dried, and then rolled such that a porosity was 0.259 to prepare a negative electrode including a negative electrode active material layer. In this case, the negative electrode active material layer was prepared such that a loading amount of the negative electrode active material layer formed on the negative electrode collector was 0.02936 g/cm$^2$ (LA), and an area of the prepared negative electrode active material layer was 5724.60 cm$^2$ (AA).

<Preparation of Separator>

A composition for forming a ceramic coating layer was prepared by adding $Al_2O_3$ as inorganic particles and PDVF as a binder to a solvent, respectively, and was then applied onto both surfaces of a polyethylene porous substrate and dried to prepare a separator having a total thickness (ST) of 13 $\mu$m on which a 3 $\mu$m thick (ST$_c$) ceramic coating layer was formed. In this case, a ratio (ST$_c$/ST) of the ceramic coating layer of the prepared separator was 0.2308.

<Preparation of Cylindrical Type Secondary Battery>

Lithium nickel cobalt manganese oxide as a positive electrode active material, Bundle-CNT as a conductive agent, and PVDF, as a binder, were mixed in a weight ratio of 98:0.6:1.4, and water was added thereto to prepare a positive electrode slurry, and the positive electrode slurry was applied onto an aluminum current collector, dried, and rolled to prepare a positive electrode.

A separator was disposed between the above-prepared positive electrode and negative electrode such that they are stacked in the order of the separator/the positive electrode /the separator/the negative electrode and then wound to prepare a jelly-roll type electrode assembly having a winding core radius of 3 mm.

After the electrode assembly prepared as described above was inserted into a cylindrical battery can having a diameter of 46 mm and a height of 80 mm, an electrolyte was injected to prepare a 4680 cell.

**Example 2.**

A cylindrical type lithium secondary battery was prepared in the same manner as in Example 1 except that the ceramic coating layer was formed to a thickness of 2 $\mu$m in the separator of Example 1. In this case, a ratio ($ST_c$/ST) of the ceramic coating layer of the prepared separator was 0.1538.

**Example 3.**

A cylindrical type lithium secondary battery was prepared in the same manner as in Example 1 except that the ceramic coating layer was formed to a thickness of 1.5$\mu$m in the separator of Example 1. In this case, a ratio ($ST_c$/ST) of the ceramic coating layer of the prepared separator was 0.1154.

**Example 4.**

A cylindrical type lithium secondary battery was prepared in the same manner as in Example 1 except that the artificial graphite and the natural graphite of Example 1 were mixed in a weight ratio of 0.4:0.6.

**Example 5.**

A cylindrical type lithium secondary battery was prepared in the same manner as in Example 2 except that the artificial graphite and the natural graphite of Example 2 were mixed in a weight ratio of 0.4:0.6.

**Example 6.**

A cylindrical type lithium secondary battery was prepared in the same manner as in Example 1 except that the artificial graphite and the natural graphite of Example 1 were mixed in a weight ratio of 0.3:0.7.

**Example 7.**

A cylindrical type lithium secondary battery was prepared in the same manner as in Example 2 except that the artificial graphite and the natural graphite of Example 2 were mixed in a weight ratio of 0.3:0.7.

**Comparative Example 1.**

A cylindrical type lithium secondary battery was prepared in the same manner as in Example 1 except that the ceramic coating layer was formed to a thickness of 1$\mu$m in the separator of Example 1. In this case, a ratio ($ST_c$/ST) of the ceramic coating layer of the prepared separator was 0.0769.

**Comparative Example 2.**

A cylindrical type lithium secondary battery was prepared in the same manner as in Example 1 except that the ceramic coating layer was formed to a thickness of 1.5$\mu$m in the separator of Example 4. In this case, a ratio ($ST_c$/ST) of the ceramic coating layer of the prepared separator was 0.1154.

**Comparative Example 3.**

A cylindrical type lithium secondary battery was prepared in the same manner as in Example 1 except that the ceramic coating layer was formed to a thickness of 1$\mu$m in the separator of Example 4. In this case, a ratio ($ST_c$/ST) of the ceramic coating layer of the prepared separator was 0.0769.

**Comparative Example 4.**

A cylindrical type lithium secondary battery was prepared in the same manner as in Example 1 except that the ceramic coating layer was formed to a thickness of 1.5$\mu$m in the separator of Example 6. In this case, a ratio (ST$_c$/ST) of the ceramic coating layer of the prepared separator was 0.1154.

**Comparative Example 5.**

A cylindrical type lithium secondary battery was prepared in the same manner as in Example 1 except that the ceramic coating layer was formed to a thickness of 1$\mu$m in the separator of Example 6. In this case, a ratio (ST$_c$/ST) of the ceramic coating layer of the prepared separator was 0.0769.

In the cylindrical type lithium secondary batteries prepared in the examples and the comparative examples, a value calculated for the ratio (ST$_c$/ST) of the thickness of the ceramic coating layer to the total thickness including the ceramic coating layer of the separator in the battery is presented in Table 1 below.

[Table 1]

|  | STc/ST |
|---|---|
| Example 1 | 0.2308 |
| Example 2 | 0.1538 |
| Example 3 | 0.1154 |
| Example 4 | 0.2308 |
| Example 5 | 0.1538 |
| Example 6 | 0.2308 |
| Example 7 | 0.1538 |
| Comparative Example 1 | 0.0769 |
| Comparative Example 2 | 0.1154 |
| Comparative Example 3 | 0.0769 |
| Comparative Example 4 | 0.1154 |
| Comparative Example 5 | 0.0769 |

## Experimental Example 1. Measurement of Reaction Areas of Artificial Graphite and Natural Graphite

BET specific surface areas of the artificial graphite and the natural graphite, which were used as the negative electrode active materials in the lithium secondary batteries prepared in the examples and the comparative examples, were measured, and are action area (m$^2$) of each graphite negative electrode active material was calculated using the BET specific surface areas and presented in Table 2 below. In this case, the BET specific surface area was measured by a nitrogen adsorption method using a BET specific surface area analyzer (name ex: BELSORP-mino II) by BEL Japan Inc., and the reaction area of each graphite negative electrode active material was calculated by multiplying a value, which was obtained by multiplying the area (AA) of the negative electrode active material layer by the loading amount (LA)of the negative electrode active material layer, by the weight ratio of each graphite to a total graphite weight included in the negative electrode active material layer and a BET specific surface area value of each graphite.

The reaction area (m$^2$) of each graphite negative electrode active material = the area (AA, unit: cm$^2$) of the negative electrode active material layer $\times$ the loading amount(LA, unit: g/cm$^2$) of the negative electrode active material layer $\times$ the weight ratio of each graphite to the total graphite weight included in the negative electrode active material layer $\times$ the BET specific surface area (m$^2$/g) of each graphite included in the negative electrode active material layer

[Table 2]

| | Negative electrode active material BET (g/cm$^2$) | | Negative electrode active material weight ratio | | Negative electrode active material reaction area (m$^2$) | |
|---|---|---|---|---|---|---|
| | Artificial graphite (BA$_{AG}$) | Natural graphite (BA$_{NG}$) | Artificial graphite (RA$_{AG}$) | Natural graphite (RA$_{NG}$) | Artificial graphite (AA×LA×BA$_{AG}$×RA$_{AG}$) | Natural graphite (AA×LA×BA$_{NG}$×RA$_{NG}$) |
| Example 1 | | | 0.5 | 0.5 | 58.826 | 176.478 |
| Example 2 | | | 0.5 | 0.5 | 58.826 | 176.478 |
| Example 3 | | | 0.5 | 0.5 | 58.826 | 176.478 |
| Example 4 | | | 0.4 | 0.6 | 47.061 | 211.774 |
| Example 5 | | | 0.4 | 0.6 | 47.061 | 211.774 |
| Example 6 | 0.7 | 2.1 | 0.3 | 0.7 | 35.296 | 247.069 |
| Example 7 | | | 0.3 | 0.7 | 35.296 | 247.069 |
| Comparative Example 1 | | | 0.5 | 0.5 | 58.826 | 176.478 |
| Comparative Example 2 | | | 0.4 | 0.6 | 47.061 | 211.774 |
| Comparative Example 3 | | | 0.4 | 0.6 | 47.061 | 211.774 |
| Comparative Example 4 | | | 0.3 | 0.7 | 35.296 | 247.069 |
| Comparative Example 5 | | | 0.3 | 0.7 | 35.296 | 247.069 |

Also, a sum (AA×LA×{(BA$_{AG}$×RA$_{AG}$) + (BA$_{NG}$×RA$_{NG}$)}) of the calculated reaction areas of the artificial graphite negative electrode active material and the natural graphite negative electrode active material is presented in Table 3 below.

[Table 3]

| | AA×LA×{(BA$_{AG}$×RA$_{AG}$) + (BA$_{NG}$×RA$_{NG}$)} (m$^2$) |
|---|---|
| Example 1 | 235.3040 |
| Example 2 | 235.3040 |
| Example 3 | 235.3040 |
| Example 4 | 258.8344 |
| Example 5 | 258.8344 |
| Example 6 | 282.3648 |
| Example 7 | 282.3648 |
| Comparative Example 1 | 235.3040 |
| Comparative Example 2 | 258.8344 |
| Comparative Example 3 | 258.8344 |
| Comparative Example 4 | 282.3648 |
| Comparative Example 5 | 282.3648 |

### Experimental Example 2. Calculation of the Reaction Area of the Negative Electrode Active Material Layer

In order to derive a reaction area where a chemical reaction may actually occur by reflecting a ratio of pores in the negative electrode active material layer in each of the negative electrodes prepared in Examples 1 to 7 and Comparative Examples 1 to 5, a ratio (1-P) of the actual negative electrode active material layer excluding a ratio of pores (empty space) was calculated from porosity (P) which is the ratio of the pores in the negative electrode active material layer.

Since the porosity of the negative electrode active material layers prepared in the examples and the comparative examples was 0.259, the ratio of the cross-sectional area where the actual chemical reaction occurred in the negative electrode active material layer was 0.741, and the reaction area of the negative electrode active material layer was calculated by multiplying the reaction area of the graphite negative electrode active material shown in Table 3 by (1-P), and the results thereof are presented in Table 4 below.

[Table 4]

| | Porosity P | 1-P | Reaction area of the negative electrode active material layer (m$^2$) |
|---|---|---|---|
| Example 1 | | | 174.3603 |
| Example 2 | | | 174.3603 |
| Example 3 | | | 174.3603 |
| Example 4 | | | 191.7963 |
| Example 5 | | | 191.7963 |
| Example 6 | | | 209.2323 |
| Example 7 | 0.259 | 0.741 | 209.2323 |
| Comparative Example 1 | | | 174.3603 |
| Comparative Example 2 | | | 191.7963 |
| Comparative Example 3 | | | 191.7963 |
| Comparative Example 4 | | | 209.2323 |
| Comparative Example 5 | | | 209.2323 |

Referring to Tables 2 and 4, it may be confirmed that the reaction areas of the negative electrode active material layers of Examples 6 and 7 and Comparative Examples 4 and 5, which had the largest $RA_{NG}$ value, the weight ratio of the natural graphite to the total weight of the natural graphite and the artificial graphite included in the negative electrode active material layer, of 0.7, were the largest at 209.2323 m$^2$, the reaction areas of the negative electrode active material layers of Examples 1 to 3 and Comparative Example 1, which had the smallest $RA_{NG}$ value of 0.5, were the smallest at 174.3603 m$^2$, and accordingly, it may be confirmed that as the proportion of the natural graphite having a larger BET specific surface area than the artificial graphite was increased, the reaction area of the negative electrode active material layer was increased.

**Experimental Example 3. Calculation of *X* Value**

For each of the 4680 cells prepared in Examples 1 to 7 and Comparative Examples 1 to 5, a value of *X* defined by Equation 1 below was calculated and presented in Table 5 below.

[Equation 1]

$$X = \frac{AA \times LA \times (1 - P) \times \{(RA_{NG} \times BA_{NG}) + (RA_{AG} \times BA_{AG})\}}{ST_C / ST \times 100}$$

In Equation 1, AA (unit: cm$^2$) is an area of the negative electrode active material layer, LA (unit: g/cm$^2$) is a loading amount of the negative electrode active material layer formed on the negative electrode collector, P (unitless) is porosity of the negative electrode active material layer, $RA_{NG}$ is a weight ratio of the natural graphite to a total weight of the natural graphite and the artificial graphite included in the negative electrode active material layer, $BA_{NG}$ (unit: m$^2$/g) is a BET specific surface area of the natural graphite, $RA_{AG}$ is a weight ratio of the artificial graphite to the total weight of the natural graphite and the artificial graphite included in the negative electrode active material layer, $BA_{AG}$ (unit: m$^2$/g) is a BET specific surface area of the artificial graphite, $ST_c$ (unit: $\mu$m) is a thickness of the ceramic coating layer in the separator, and ST (unit: $\mu$m) represents a thickness of the separator.

[Table 5]

|  | $X$ |
|---|---|
| Example 1 | 7.556 |
| Example 2 | 11.333 |
| Example 3 | 15.111 |
| Example 4 | 8.311 |
| Example 5 | 12.467 |
| Example 6 | 9.067 |
| Example 7 | 13.600 |
| Comparative Example 1 | 22.667 |
| Comparative Example 2 | 16.622 |
| Comparative Example 3 | 24.934 |
| Comparative Example 4 | 18.133 |
| Comparative Example 5 | 27.200 |

Referring to Table 5, it may be confirmed that $X$ values of Examples 1 to 7 fall within a numerical range of 7 $m^2$ to 16 $m^2$, but $X$ values of Comparative Examples 1 to 5 fall outside the above numerical range.

**Experimental Example 4. High-Temperature Storage Characteristics Evaluation**

In order to compare high-temperature storage characteristics of the cylindrical type secondary batteries prepared in Examples 1 to 7 and Comparative Examples 1 to 5, a hot box test was performed.

Specifically, the cylindrical type secondary batteries prepared in Examples 1 to 7 and Comparative Examples 1 to 5 were each put in a hot box capable of controlling internal temperature, the temperature was increased from room temperature to 130°C at a rate of 5°C/min, whether ignition occurred was then checked, and the results thereof are presented in Table 6 below.

[Table 6]

|  | HOTBOX test whether ignition occurred |
|---|---|
| Example 1 | ✕ |
| Example 2 | ✕ |
| Example 3 | ✕ |
| Example 4 | ✕ |
| Example 5 | ✕ |
| Example 6 | ✕ |
| Example 7 | ✕ |
| Comparative Example 1 | ○ |
| Comparative Example 2 | ○ |
| Comparative Example 3 | ○ |
| Comparative Example 4 | ○ |
| Comparative Example 5 | ○ |

Referring to Table 6, it may be confirmed that the lithium secondary batteries prepared in Examples 1 to 7, in which the ratio ($ST_C/ST$) of the ceramic coating layer in the separator was in a range of 0.13 to 0.25 and the $X$ value was in a range of 7 $m^2$ to 16 $m^2$, had excellent thermal performance even if the ratio of the natural graphite in the negative electrode active material was 0.5 or more.

[Description of the Symbols]

1: Lithium Secondary Battery
2: Pack Housing
3: Battery Pack
10: Positive Electrode
11: Negative Electrode
12: Separator
20: Current Collector
21:Active Material Layer
21a:Negative Electrode Active Material Layer
22: Non-coating Portion
22a: Non-coating Portion of the Negative Electrode
22c: Non-coating Portion of the Positive Electrode
24: Insulation Layer
C: Winding Center
140: Lithium Secondary Battery
141: Electrode Assembly
142: Battery Can
143: Sealing Body
143a: Cap Plate
143b: First Gasket
143c: Connection Plate
143d: Protrusion
144: First Current Collecting Plate
145: Second Current Collecting Plate
146: Insulator
146a: Non-coating Portion of the Positive Electrode
146b: Non-coating Portion of the Negative Electrode
147: Beading Portion
148: Crimping Portion
149: Lead
151: Lead Hole
152: Venting Portion
170: Lithium Secondary Battery
171: Battery Can
172: Rivet Terminal
172a: Terminal Exposed Portion
172b: Terminal Insertion Portion
173: Second Gasket
173a: Gasket Exposed Portion
173b: Gasket Insertion Portion
174: Insulating Cap
176: Second Current Collecting Plate
178: Sealing Body
178a: Cap Plate
178b: First Gasket
179: Venting Portion
180: Beading Portion
181: Crimping Portion

**Claims**

**1.**  A cylindrical type lithium secondary battery comprising:

an electrode assembly in which a positive electrode, a negative electrode, and a separator disposed between the positive electrode and the negative electrode are wound in one direction; and a battery can in which the electrode assembly and an electrolyte are accommodated,

wherein the negative electrode comprises a negative electrode active material layer formed on a negative electrode collector,

the negative electrode active material layer comprises natural graphite and artificial graphite as a negative electrode active material,

the separator comprises a substrate and a ceramic coating layer that is entirely coated on one surface or both surfaces of the separator substrate, and

a value of $X$ defined by Equation 1 is in a range of 7 m$^2$ to 16 m$^2$.

[Equation 1]

$$X = \frac{AA \times LA \times (1 - P) \times \{(RA_{NG} \times BA_{NG}) + (RA_{AG} \times BA_{AG})\}}{ST_C/ST \times 100}$$

wherein, in Equation 1,

AA (unit: cm$^2$) is an area of the negative electrode active material layer,

LA (unit: g/cm$^2$) is a loading amount of the negative electrode active material layer formed on the negative electrode collector,

P (unitless) is porosity of the negative electrode active material layer,

$RA_{NG}$ is a weight ratio of the natural graphite to a total weight of the natural graphite and the artificial graphite which are included in the negative electrode active material layer,

$BA_{NG}$ (unit: m$^2$/g) is a Brunauer-Emmett-Teller(BET) specific surface area of the natural graphite,

$RA_{AG}$ is a weight ratio of the artificial graphite to the total weight of the natural graphite and the artificial graphite which are included in the negative electrode active material layer,

$BA_{AG}$ (unit: m$^2$/g) is a BET specific surface area of the artificial graphite,

$ST_c$ (unit: μm) is a thickness of the ceramic coating layer in the separator, and

ST (unit: μm) represents a thickness of the separator.

2. The cylindrical type lithium secondary battery of claim 1, wherein the AA is in a range of 5500 cm$^2$ to 6000 cm$^2$.

3. The cylindrical type lithium secondary battery of claim 1, wherein the $RA_{NG}$ is 0.5 or more.

4. The cylindrical type lithium secondary battery of claim 1, wherein the $BA_{NG}$ is in a range of 1 m$^2$/g to 3 m$^2$/g.

5. The cylindrical type lithium secondary battery of claim 1, wherein the $BA_{AG}$ is in a range of 0.5 m$^2$/g to 0.9 m$^2$/g.

6. The cylindrical type lithium secondary battery of claim 1, wherein the negative electrode has a total reaction area of the artificial graphite and the natural graphite of the negative electrode active material layer of 200 m$^2$ or more.

7. The cylindrical type lithium secondary battery of claim 1, wherein the LA is in a range of 0.025 g/cm$^2$ to 0.035 g/cm$^2$.

8. The cylindrical type lithium secondary battery of claim 1, wherein the P is 0.35 or less.

9. The cylindrical type lithium secondary battery of claim 1, wherein the ST is in a range of 12 μm to 15 μm.

10. The cylindrical type lithium secondary battery of claim 1, wherein the $ST_c$ is 5 μm or less.

11. The cylindrical type lithium secondary battery of claim 1, wherein the $ST_c$/ST is in a range of 0.05 to 0.3.

12. The cylindrical type lithium secondary battery of claim 1, wherein a ratio (R/H) of a diameter (R) of the lithium secondary battery to a height (H) of the lithium secondary battery is 0.4 or more.

13. The cylindrical type lithium secondary battery of claim 1, wherein the negative electrode active material is composed of the natural graphite or the artificial graphite.

**14.** A battery pack comprising the cylindrical type lithium secondary battery of claim 1 as a unit cell.

FIG. 1

WINDING DIRECTION

FIG.2

FIG.3

FIG. 4

FIG. 5

FIG. 6

## INTERNATIONAL SEARCH REPORT

| International application No. |
|---|
| **PCT/KR2025/011208** |

### A. CLASSIFICATION OF SUBJECT MATTER

**H01M 10/0587**(2010.01)i; **H01M 10/04**(2006.01)i; **H01M 4/587**(2010.01)i; **H01M 10/052**(2010.01)i; **H01M 50/446**(2021.01)i; **H01M 50/451**(2021.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0587(2010.01); H01M 10/052(2010.01); H01M 2/16(2006.01); H01M 50/107(2021.01); H01M 50/152(2021.01); H01M 50/167(2021.01); H01M 50/451(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 원통형 리튬 이차 전지 (cylindrical lithium secondary battery), 천연 흑연 (natural graphite), 인조 흑연 (artificial graphite), 세라믹 코팅 (ceramic coating), 폼 팩터 (form factor)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0054604 A (LG ENERGY SOLUTION, LTD.) 25 April 2023 (2023-04-25) abstract; claims 1, 42; paragraphs [0363], [0393], [0394], [0494] | 1-14 |
| A | KR 10-2024-0082244 A (LG ENERGY SOLUTION, LTD.) 10 June 2024 (2024-06-10) abstract; claims 1, 5, 8, 18; paragraphs [0148], [0183] | 1-14 |
| A | KR 10-2023-0070167 A (LG ENERGY SOLUTION, LTD.) 22 May 2023 (2023-05-22) abstract; claims 1, 6; paragraphs [0381], [0601] | 1-14 |
| A | KR 10-2015-0053176 A (SAMSUNG SDI CO., LTD.) 15 May 2015 (2015-05-15) abstract; claim 1; paragraphs [0028], [0068] | 1-14 |
| A | JP 2011-096504 A (SANYO ELECTRIC CO., LTD.) 12 May 2011 (2011-05-12) abstract; claim 1 | 1-14 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 October 2025** | **02 November 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/011208**

| Patent document cited in search report | | | Publication date (day/month/year) | Patent family member(s) | | | Publication date (day/month/year) |
|---|---|---|---|---|---|---|---|
| KR | 10-2023-0054604 | A | 25 April 2023 | CA | 3233788 | A1 | 20 April 2023 |
| | | | | CN | 115986329 | A | 18 April 2023 |
| | | | | CN | 218867340 | U | 14 April 2023 |
| | | | | EP | 4386969 | A1 | 19 June 2024 |
| | | | | JP | 2024-528137 | A | 26 July 2024 |
| | | | | JP | 7744502 | B2 | 25 September 2025 |
| | | | | KR | 10-2023-0054256 | A | 24 April 2023 |
| | | | | KR | 10-2729709 | B1 | 14 November 2024 |
| | | | | US | 2023-0118382 | A1 | 20 April 2023 |
| | | | | WO | 2023-063808 | A1 | 20 April 2023 |
| KR | 10-2024-0082244 | A | 10 June 2024 | CN | 119013815 | A | 22 November 2024 |
| | | | | DE | 202023002855 | U1 | 09 December 2024 |
| | | | | EP | 4485609 | A1 | 01 January 2025 |
| | | | | JP | 2025-511662 | A | 16 April 2025 |
| | | | | KR | 10-2024-0161624 | A | 12 November 2024 |
| | | | | KR | 10-2729984 | B1 | 14 November 2024 |
| | | | | US | 2024-0204357 | A1 | 20 June 2024 |
| | | | | WO | 2024-117862 | A1 | 06 June 2024 |
| KR | 10-2023-0070167 | A | 22 May 2023 | CA | 3238237 | A1 | 19 May 2023 |
| | | | | CN | 117981158 | A | 03 May 2024 |
| | | | | EP | 4391194 | A1 | 26 June 2024 |
| | | | | JP | 2024-543432 | A | 21 November 2024 |
| | | | | KR | 10-2846023 | B1 | 14 August 2025 |
| | | | | US | 2024-0396168 | A1 | 28 November 2024 |
| | | | | WO | 2023-085893 | A1 | 19 May 2023 |
| KR | 10-2015-0053176 | A | 15 May 2015 | CN | 104638216 | A | 20 May 2015 |
| | | | | CN | 104638216 | B | 13 August 2019 |
| | | | | EP | 2871692 | A1 | 13 May 2015 |
| | | | | EP | 2871692 | B1 | 02 May 2018 |
| | | | | JP | 2015-090866 | A | 11 May 2015 |
| | | | | JP | 6687223 | B2 | 22 April 2020 |
| | | | | KR | 10-2108280 | B1 | 07 May 2020 |
| | | | | US | 10205148 | B2 | 12 February 2019 |
| | | | | US | 2015-0125736 | A1 | 07 May 2015 |
| JP | 2011-096504 | A | 12 May 2011 | None | | | |

Form PCT/ISA/210 (patent family annex) (July 2022)

**EP 4 765 303 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240102781